## Europäisches Patentamt
## European Patent Office
## Office européen des brevets

(19)

(11) Publication number: **0 004 980**

**B2**

(12) # NEW EUROPEAN PATENT SPECIFICATION

(45) Date of publication of the new patent specification: **12.12.84**

(51) Int. Cl.³: **G 02 B 5/14**

(21) Application number: **79101250.3**

(22) Date of filing: **25.04.79**

(54) Reversible light beam coupler.

(30) Priority: **26.04.78 IT 6793278**

(43) Date of publication of application:
**31.10.79 Bulletin 79/22**

(45) Publication of the grant of the patent:
**12.12.84 Bulletin 84/50**

(45) Mention of the opposition decision:
**15.04.81 Bulletin 81/15**

(84) Designated Contracting States:
**DE FR GB NL**

(56) References cited:
**DE-A-2 233 853**
**DE-A-2 706 331**
**FR-A-2 348 502**
**GB-A-1 017 354**
**GB-A-1 176 864**
**US-A-3 832 030**
**US-A-3 883 223**
**US-A-3 926 501**
**US-A-3 977 764**
**US-A-4 011 005**
**US-A-4 021 099**
**US-A-4 078 852**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Di Vita, Pietro**
**C.so Francia 351**
**Turin (IT)**

(74) Representative: **Riederer Freiherr von Paar zu Schönau, Anton**
**Freyung 615 Postfach 2664**
**D-8300 Landshut (DE)**

Courier Press, Leamington Spa, England.

## Description

The present invention relates to signal transmission through optical waveguides, and more particularly it concerns a coupler for light beams transmitted over optical waveguides, arranged both the divide a light beam into at least two partial beams and to combine into a single beam at least two partial beams, the optical waveguides each intended to operate either as a launching guide for the light beam to be divided or one of the partial light beams to be combined, or as receiving guide for a partial beam or the combined beam, the coupler comprising an optical system formed by, or optically equivalent to a plurality of concave reflecting surfaces.

The sharing, among a plurality of beams, of the power associated with a single beam is required whenever a signal is to be sent to a plurality of receivers, for instance in systems for optical conference; inversely, the combination of a plurality of beams into a single one is required for instance in case of multilevel optical transmissions.

The problem of sharing on two guides the beam conveyed by a third guide may be solved by physically joining the three concerned guides, so as to obtain an Y-shaped structure: this is obtained by cutting the end parts of two guides along a plane substantially parallel to the axes thereof, so that said end parts may be glued and the cross-section of the resulting guide progressively decreases until it equals the cross-section of the third guide. Even neglecting the difficult right execution of said joints, it is clear that the first two guides can be joined only if their axes, in the end parts to be joined, form a very small acute angle. As a fibre can receive only light rays comprises within a given angle, such a system can operate only in one direction, that is it allows the beam coming from the guide forming the Y-"leg" to be shared on the two guides forming the Y-"arms". It will be impossible to share between the other two guides the beam coming from an Y-"arm".

The same "irreversibility" is a feature of the systems employing beam splitters. Moreover, the use of beam splitters does not allow the combination of a plurality of beams without losses.

A reversible coupler is also known (US—A 4 011 005) whereby one input fibre or fibre bundle is coupled to two or more output fibres or fibre bundles or vice versa. The coupler comprises at least three elongated frusto-conical shaped arms coupled together by their minor bases through a connecting medium while their major bases are connected to the end faces of the respective fibres or fibre bundles. Subsequent reflection of the light rays received at one end of each arm causes at the walls thereof an opening of the angle until an almost hemispherical radiation pattern when radiated from the minor base, or a closing of the angle toward the major base. Thus, upon suitable joice of the arm length, the light emitted from the minor basis is distributed over the other arms while the light taken in through the minor basis is approached to the axial direction so as to be acceptable to the respective fibre or fibre bundles joining that major basis. The interor frustro-conical walls form some sort of concave reflecting surfaces. The construction and precise finishing thereof does not easily lend itself for miniaturization, the major basis having about the diameter of the fibre or, rather, of the fibre bundle. Due to this difficult miniaturization, the prior art coupler seems alright primarily for coupling large fibre bundles used e.g. for illumination purpose, but not for coupling individual fibres as is required for optical fibre telecommunication. Further, with the prior art coupler, dimensionning of the frustro-conical arms is critical in the respect that upon too long arms or too much slope, part of the rays could be reflected back toward the launching fibre (bundle).

Another coupler is known (US—A 3 883 233) which uses a single concave reflecting surface arranged opposite the end faces of parallely bundled waveguides and intended to reflect light emitted from any of the waveguides into all of the remaining waveguides in the bundle. However, in this prior art coupler, part of the emitted light is also reflected into the launching waveguide so that in case of just a few waveguides, e.g. three ones, the light transmitted back to the source and the loss resulting thereform are considerable. The reflecting surface in this case may equally be hyperboloidal, paraboloidal, spherical or ellipsoidal.

There is also known another, non-reciprocal coupler using an ellipsoidal reflecting surface (US—A 4 021 099, Fig. 8) wherein the optical energy is emitted from a waveguide at one focus of the ellipsoide and is received by the endface of another waveguide at the other focus of the ellipsoide, one of the waveguides being also coupled to another waveguide joining it after some gap in its acual direction. In this coupler, the coupling losses are rather high since part of the reflecting surface is necessarily shadowed by the third waveguide.

The use of elliptical concave reflecting surfaces is also known in other applications than optical couplers, e.g. in gathering the light of several light sources in one optical wave-guide (US—A 3 929 501) or in optical equalizers wherein a ray path inversion is caused between axial rays and rays at the maximum guidance angle of the waveguide (DE—A1 27 06 331).

The present invention aims to provide a device which allows a light beam transmitted on a single optical waveguide, e.g. an optical fibre for telecommunication purposes, to be divided with low loss into two or more partial beams to be transmitted over other optical waveguides, the device allowing a reversible operation including combining a plurality of beams into a single one.

According to the invention this is accomplished by a coupler as characterised in claim 1 or 2.

This construction which combines adjacent elliptical reflecting surfaces so as to share the light bundle to be divided or to commonly focus the light bundles to be combined, due to its focussing features need not be miniaturized but may be large as compared to the waveguide diameter so that its manufacturing upon observation of the necessary accurateness and even as a mass product for use in optic fibre networks is conveniently possible.

These features of the invention and further details will more clearly result from the following description of some preferred embodiments thereof, given by way of non limitative example and shown in the annexed drawings, in which:

Fig. 1 is a diagrammatic cross-section of a first embodiment, in which the optical guides are arranged symmetrically in the same plane, and the reflecting surfaces have elliptical cross-sections;

Fig. 2 is a diagrammatic cross-section of a second embodiment, in which the optical guides are arranged asymmetrically;

Fig. 3, similar to Fig. 1, shows another embodiment of the invention which employs plane reflecting surfaces and lenses;

Fig. 4 is a perspective view of a further embodiment, in which the guides are arranged radially in the space;

Fig. 5 shows a plurality of cooperating couplers according to the invention.

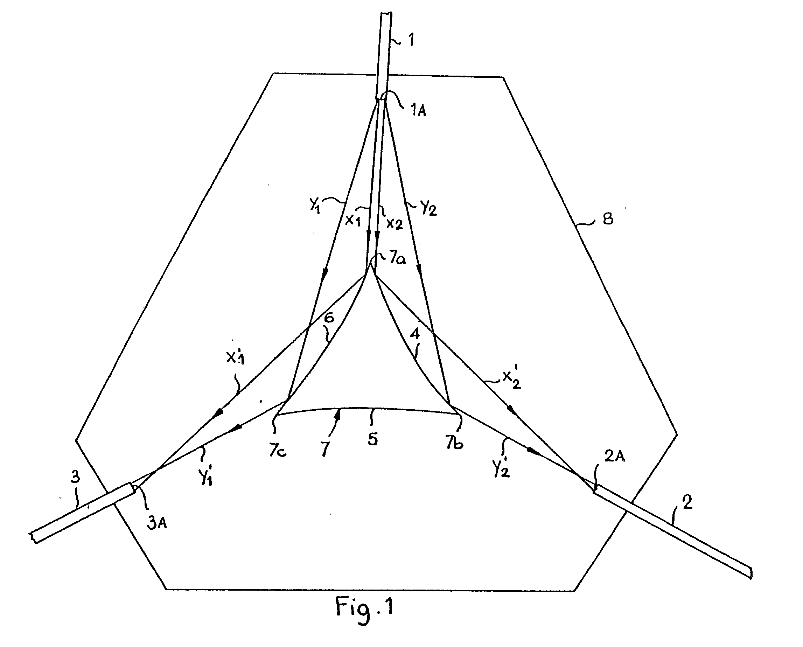

In Fig. 1, references 1, 2, 3 denote three trunks of optical waveguides, where one (launching guide) conveys a light beam to be divided and the other two (receiving guides) receive the partial beams, resulting from the division.

The axes of the three waveguides lie in the same plane and the geometrical centres $1A$, $2A$, $3A$ of their end faces are the foci of three concave reflecting surfaces 4, 5, 6 whose sections are segments of ellipses, adjacent ones of which have a common focus.

In the embodiment shown in Fig. 1, said surfaces can be obtained from the faces of a triangular prism 7 and are so arranged that the three foci $1A$, $2A$, $3A$ are the vertices of an equilateral triangle.

If the guides are optical fibres with circular cross-sections, surfaces 4, 5, 6 are three bowls of a revolution ellipsoid.

If the guides are ribbons or films, surfaces 4, 5, 6 are cylindrical surfaces with the generatrices · perpendular to the minor dimensions of the ribbon or film; in this case the whole device is limited by two mirror-like surfaces parallel to the plane of the drawing and tangent to the fibre cores.

The end parts of the guides and prism 7 are embedded in a transparent material 8, which refractive index equal to that of the cores of guides 1, 2, 3.

The axes of guides 1, 2, 3 belong to the straight lines connecting foci $1A$, $2A$, $3A$ of the ellipses with the nearest vertices $7a$, $7b$, $7c$ of the triangle, obtained by cutting prism 7 with the plane of the guide axes. The three reflecting surfaces have the same eccentricity and area: more particularly, the area of surfaces 4, 5, 6 is such as to collect also the rays forming the maximum guidance angle with the optical guide axis.

Thus, an axially symmetrical structure is obtained, in which the beam emitted by a fibre is shared into substantially equal fractions between the remaining fibres. In fact, considering for instance the beam outgoing from guide 1 and neglecting the ray just coinciding with the guide axis, the rays, which in the drawing are on the left of the axis, are reflected by surface 6, concentrated about focus $3A$ of the same surface collected by guide 3; the rays which in the drawing are on the right of axis of guide 1 are reflected by surface 4 into focus $2A$ and collected by guide 2.

For sake of simplicity, the reflection is shown only for two rays $x_1$, $x_2$ parallel to axis of guide 1, and for two rays $y_1$, $y_2$ at the maximum guidance angle. The respective reflected rays are denoted by $x_1'$, $x_2'$, $y_1'$, $y_2'$.

It will be appreciated that the reflection gives rise to a ray-path inversion between axial rays and rays at the maximum guidance angle, so that also an equalization effect is achieved, at least for guides with step profile of the refractive index.

Owing to the symmetry of the described structure, the considerations made for guide 1 apply also to the beam emitted by any other guide.

As surfaces 4, 5, 6 collect also the rays outgoing at the maximum guidance angle, the division of the beam outgoing from guide 1 does not entain substantially any power loss.

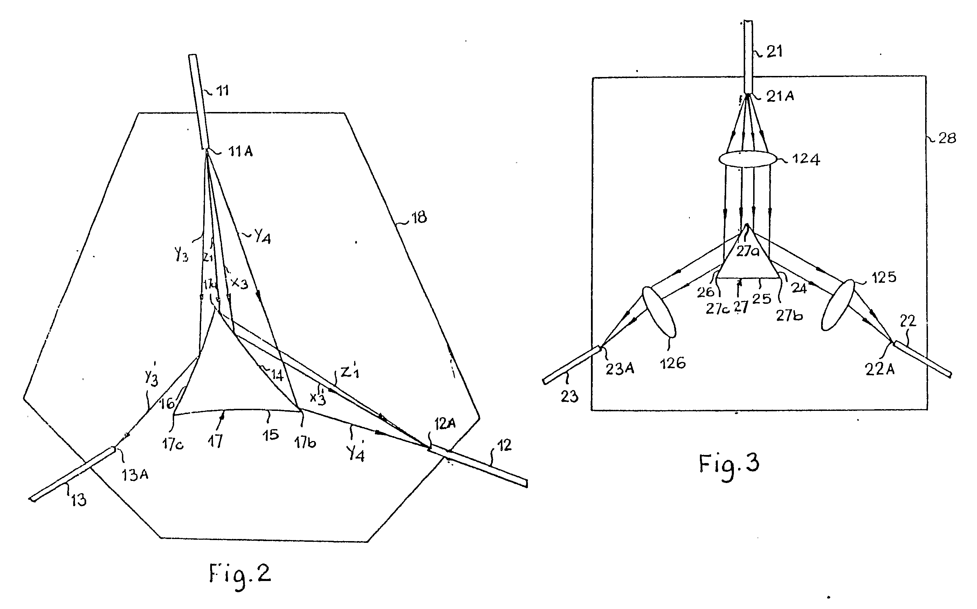

Fig. 2 shows a similar device, which can be used when a uniform sharing of the optical power among the guides is not required.

In this embodiment, the axes of guides 11, 12, 13 still lie in a same plane, and centres $11A$, $12A$, $13A$ of their end faces coincide with the foci of the three surfaces 14, 15, 16 whose cross-sections are segments of ellipses adjacent ones of which have a common focus. Said surfaces 14, 15, 16 have been made out of the side faces of a prism 17 and, in this embodiment, have different areas and eccentricities. The guide axes are not aligned with the straight lines joining foci $11A$, $12A$, $13A$, with vertices $17a$, $17b$, $17c$ of the triangle obtained by cutting prism 17 with the plane of the guide axes. The end parts of guides 11, 12, 13 and prism 17 are embedded in a transparent medium 18 having the same refractive index as the guide cores.

Assuming that the light beam outgoing from fibre 11 is to be divided, the drawing clearly shows that surfaces 14, 16 collect different beam fractions so that the power emitted by guide 11 is shared non uniformly between guides 12, 13. In order to point out the dissymetry, the drawing shows two rays $y_3$, $y_4$ outgoing from guide 11 at the maximum guidance angle, ray $x_3$ aligned with the guide axis and a ray $z_1$ imp-inging on surface 14 near edge 17a; $y'_3$, $y'_4$, $z'_1$ and $x'_3$ denote the corresponding reflected rays. As shown, surface 14 collects, besides the half beam limited by rays $x_3$, $y_4$, also the beam fraction limited by rays $z_1$, $x_3$; therefore surface 16 collects a beam fraction smaller than 50%.

The same considerations apply to the division of possible beam outgoing from guides 12 or 13.

By varying the eccentricities of surfaces 14, 15, 16 and the relative angles of guides 11, 12, 13, the proportions, in which a beam emitted by a guide is shared between the other two guides can be changed. Obviously the values of eccentricity and angles must be such that all or substantially all reflected rays lie within the acceptance angles of the different fibres, so as to obtain a reversible system and minimal losses.

Clearly, it is rather difficult to obtain surfaces with elliptical section, as those above referred to, especially when the waveguide axes do not lie in the same plane.

However, the invention includes also couplers using optical systems equivalent to the assembly of ellipsoidal or cylindrical surfaces 4, 5, 6 or 14, 15, 16. An example is shown in Fig. 3, where references 21, 22, 23 denote three optical waveguides of which the axes lie in a same plane, form equal angles and are aligned with the vertices 27a, 27b, 27c of an equilateral triangle obtained by cutting a prism 27, having flat reflecting side faces 24, 25, 26, by means of the plane of said axes.

Each geometrical centre 21A, 22A, 23A of the end faces of guides 21, 22, 23 coincides with a focus of a converging lens (or lens system) 124, 125, 126 respectively, arranged so as to collect the whole beam outgoing from the facing guide.

One of the flat reflecting surfaces 24, 25, 26 and one lens pair are together optically equivalent to one of surfaces 4, 5, 6 with elliptical section shown in Fig. 1, and therefore prism 27 and lenses 124, 125, 126 are equivalent as a whole to solid 7 of Fig. 1.

In fact, considering the beam emitted by· guide 21, that beam is collimated by lens 124; the collimated beam will be splitted by edge 27a of prism 27 and, if guide 21 is directed as in the drawing, half beam will be reflected by prism face 24 and the other half beam by face 26; the reflected half-beams will be collected by lenses 125, 126 and concentrated in the respective foci 22A, 23A at the end faces of guides 22, 23.

The same considerations apply to possible beams outgoing from guides 22, 23.

Using a prism 27 whose section is not an equilateral triangle, and/or varying the angles between the guide axes, a device permitting a non-uniform sharing of the light beams, that is a device equivalent to that shown in Fig. 2, will be obtained.

Also Fig. 3 shows schematically the transparent medium 28 in which the optical system and the guide end parts are embedded.

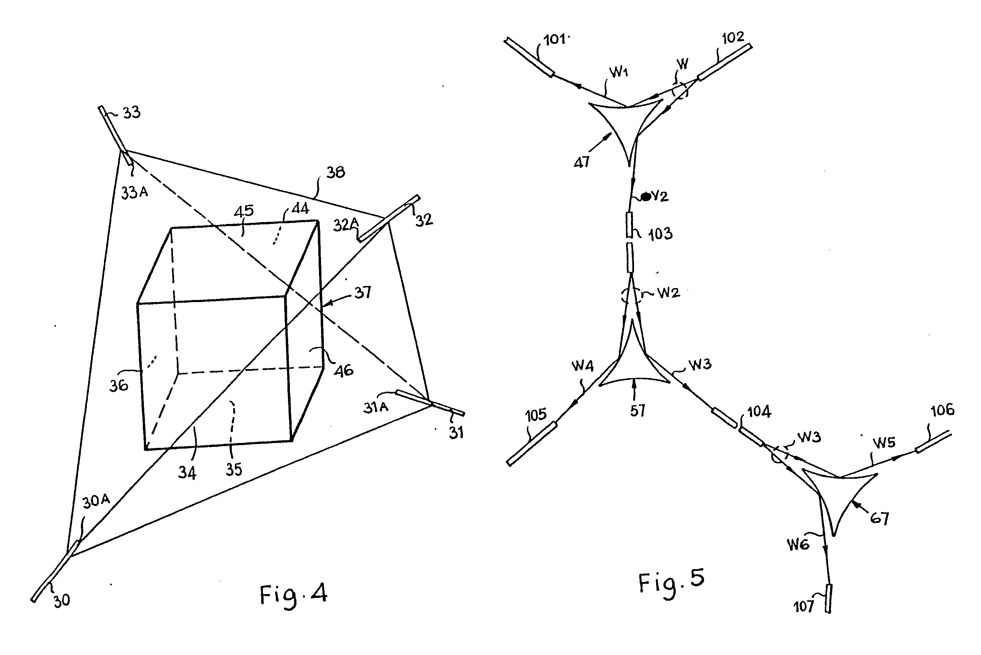

Hereinbefore the fibres have always been assumed to lie in a common plane. However, the invention can be applied also to optical guides whose axes are non-coplanar. An exemplary embodiment is shown in Fig. 4, wherein the axes of four optical guides 30, 31, 32, 33 are aligned with the diagonals of a cube 37 with reflecting faces, and the geometrical centres 30A, 31A, 32A 33A of the guide end faces coincide with the foci of elliptical sections surfaces formed by the faces 34, 35, 36, 44, 45, 46 of cube 37, so that surfaces associated to faces converging into a same vertex have a common focus.

More particularly, point 30A is the focus common to elliptical surfaces associated to faces 34, 35, 36; point 31A is the focus common to elliptical surfaces associated to faces 35, 44, 46; point 33A is the focus common to surfaces associated to faces 36, 44, 45.

For sake of simplicity, the surfaces with elliptical section are not shown.

Thus a light beam outgoing for instance from guide 30 is reflected by faces 34, 35, 36 and colleected by guides 31, 32, 33; owing to the system symmetry, said beam will be divided among the guides in a substantially uniform way. This occurs also when the launching guide is guide 31, or 32 or 33, taking into account every time a different combination of reflecting faces.

Obviously, the same effect is achieved through plane reflecting faces and pairs of lenses, each lens having a focus coinciding with the centre of the fibre end face. In the drawing, reference 38 shows the transparent medium embedding the fibre ends and the optical system.

When using the devices shown in Figs. 1 to 4, only a limited number of guides can take part in the light beam coupling, as it is always necessary that the angles between adjacent guides are sufficiently great, so that most or all reflected rays lie within the acceptance angle of the receiving guides.

This restriction can be overcome by the arrangement of Fig. 5 illustrating a plurality of symmetrical devices similar to that shown in Fig. 1.

References 47, 57, 67 denote the solids with reflecting surfaces, similar to solid 7, and references 101, 102 ... 107 denote the guides taking part in the light beam sharing; these guides are arranged so that the centres of their end faces coincide with the foci of the reflecting surfaces in such a multiple system some guides 103, 104, are associated with respective pairs of solids, for instance guide 103 with solids 47 and 57 and guide 104 with solids 57 and 67. Each of these guides acts on one hand as receiving guide for a beam reflected by one of the solids associated therewith, and on the other hand as a guide launching the same beam towards the other solid.

For instance, a beam W launched by guide 102 will be divided by solid 47 into two reflected partial beams, shown by rays W1, W2, and collected by guides 101, 103. Beam W2 collected by guide 103 is launched towards solid 57, which divides the beam into two partial beams, shown by rays W3, W4 and collected by guides 104, 105. Beam W3, collected by guide 104, is launched towards solid 67 and divided into two partial beams W5, W6, collected by guides 106, 107, and so on.

The combination of several coupling devices allows the transfer of a beam between guides forming a small angle, such as guides 102 and 106, and the sending of the information associated with a light beam to many users. The number of users, and hence the number of subsequent splittings possible for a single beam depends upon both the losses introduced by each operation and the minimum power value detectable at the end of the users' guides.

The devices of Figs. 1, 2, 3 can employ reflecting surfaces, whose cross-sections define a polygon with more than three sides, in order to share the beam outgoing from a guide between the two adjacent guides. In this case, the number of guides and reflecting surfaces, the angle between adjacent guides and the sizes of the reflecting surfaces will be chosen so that said surfaces collect a whole light beam to be divided. Moreover, which ever the launching guide may be, most or all rays in the partial beams obtained by the division should define, with the axes of the collecting guides, angles not greater than the acceptance angle of said guides.

Furthermore, if the guides do not lie in a common plane, the reflecting surfaces could present a configuration other than the cubic one shown in Fig. 4, provided that they have a common focus three by three.

Hereinbefore the beam splitting has always been referred to; nevertheless the described devices can be also used for combining several beams into a single one, for instance for carrying out multilevel optical signal transmissions; in this case means have to be provided preventing that one of the launching guides collects a partial beam resulting from the splitting of the beam emitted by another launching guide.

## Claims

1. Coupler for light beams transmitted over optical waveguides, arranged both to divide a light beam into at least two partial beams and to combine into a single beam at least two partial beams, the optical waveguides (1, 2, 3; 11, 11, 13; 30, 31, 32, 33) each intended to operate either as a launching guide for the light beam to be divided or one of the partial light beams to be combined, or as receiving guide for a partial beam or the combined beam, the coupler comprising an optical system (7; 17; 27; 37) formed by reflecting surfaces (4, 5, 6; 14, 15, 16; 34, 35, 36, 44, 45, 46) for distributing or combining the light beams, characterized in that the sections of the surfaces along the plane(s) passing through the launching and the receiving guide(s) are concave segments of ellipses adjacent ones of which have a common focus, the foci (1A, 2A, 3A; 11A, 12A, 13A; 30A, 31A, 32A, 33A) of said ellipses coinciding with the geometrical centres of the end faces of said optical waveguides (1, 2, 3; 11, 12, 13; 30, 31, 32, 33), each surface reflecting towards the guide terminating at a first focus the beam or beam fraction coming from the guide terminating at the other focus; and in that a body (8; 18; 38) of transparent material is provided having about the same refractive index as the cores of said guides (1, 2, 3; 11, 12, 13; 30, 31, 32, 33), embedding the optical system (7; 17; 27; 124, 125, 126; 37) and the guide end portions closest to said system.

2. Coupler for light beams transmitted over optical waveguides, arranged both to divide a light beam into at least two partial beams and to combine into a single beam at least two partial beams, the optical waveguides (21, 22, 23) each intended to operate either as a launching guide for the light beam to be divided or one of the partial light beams to be combined, or as receiving guide for a partial beam or the combined beam, the coupler comprising an optical system (124, 125, 126) formed by reflecting surfaces for distributing or combining the light beams, characterized in that the reflecting surfaces are flat surfaces (24, 25, 26) each of which is associated with pairs of lenses (124, 125, 126) a focus (21A, 22A, 23A) of each lens coinciding with the geometrical centre of the end face of one of said optical waveguides (21, 22, 23) so as to be equivalent to reflecting concave segments of ellipse sections, each surface reflecting towards the guide terminating at a first focus the beam or beam fraction coming from the guide terminating at the other focus; and in that a body (28) of transparent material is provided having about the same refractive index of the cores of said guides (21, 22, 23), embedding the optical system (27, 124, 125, 126) and the guide end portions closest to said system.

3. Coupler according to claim 1, characterized in that said concave reflecting surfaces (4, 5, 6; 14, 15, 16; 34, 35, 36; 44, 45, 46) are parts of a revolution ellipsoid.

4. Coupler according to claim 1, characterized in that said concave reflecting surfaces (4, 5, 6; 14, 15, 16; 34, 35, 36; 44, 45, 46) are parts of cylindrical surfaces with elliptical cross-sections.

5. Coupler according to claim 1, characterized in that the number of waveguides (1, 2, 3; 11, 12, 13; 21, 22, 23; 30, 31, 32, 33) and their positions relative to one another and to the reflecting surfaces (4, 5, 6; 14, 15, 16; 24, 25, 26; 34, 35, 36, 44, 45, 46) determine the incidence angle of the beams or beam fractions on each reflecting surface such that most or all rays of the corresponding reflected beam(s) reach the end face(s) of the receiving guide(s) within an angle not greater than the acceptance angle(s) of said guide(s).

6. Coupler according to claims 1 and 5, characterized in that the axes of said guide lie in a common plane and the centres of the guide end faces lie in the vertices of a regular polygon, and in that the axis of each guide passes through the intersection of the two adjacent reflecting surfaces whose common focus lies in the centre of the guide end face, said axis being aligned with the bisecting line of the angle of said adjacent surfaces, so that a launched beam is divided into two substantially equal fractions, and collected by the two guides adjacent to that conveying the launched beam.

7. Coupler according to claim 6, characterized in that said polygon is an equilateral triangle.

8. Coupler according to claims 1 and 5, characterized in that the axes of said guides lie in a common plane and are oriented so that at least one axis crosses one of said ellipse segments in a point different from the end points.

9. Coupler according to claim 1, characterized in that four waveguides (30, 31, 32, 33) are to be connected whose axes are non-coplanar and are aligned with the diagonals of a cube (37), and in that said reflecting surface are formed by the cube faces (34, 35, 36, 44, 45, 46), the surfaces formed by faces converging into the same vertex of the cube having a common focus.

10. Coupler according to claim 1, the optical guides having a step refractive index profile, characterized in that the reflecting surfaces cause a ray path inversion between axial rays and rays at the maximum guidance angle.

11. Coupler according to claim 1, characterized in that it comprises a plurality of sets of optical waveguides (101 ... 107) and a plurality of optical systems (47, 57, 67), formed by a plurality of concave reflecting surfaces with elliptical cross-sections, said guide seats being associated with the optical systems (47, 57, 67) so that at least some guides (103, 104) collecting the beams reflected by the surfaces of an optical system (47, 57) act as launching guides towards the reflecting surfaces of another optical system (57, 67).

**Patentansprüche**

1. Koppelvorrichtung für über optische Wellenleiter übertragene Lichtbündel, sowohl zum Teilen eines Lichtbündels in wenigstens zwei Teillichtbündel als auch zum Kominieren von wenigstens zwei Teillichtbündeln zu einem einzigen Lichtbündel, wobei der einzeeine optische Wellenleiter (1, 2, 3; 11, 12, 13; 30, 31, 32, 33) entweder als das zu teilende Lichtbündel bzw. eines der zu kominierenden Teillichtbündel abgebender Leiter oder als eines der Teillichtbündel bzw. das kombinierte Lichtbündel empfangender Leiter dienen soll, mit einem optischen System (7; 17; 27; 37), das aus reflektierenden Flächen (4, 5, 6; 14, 15, 16; 34, 35, 36, 44, 45, 46) zum Verteilen oder Kombinieren der Lichtbündel gebildet ist, dadurch gekennzeichnet, daß die Schnittlinie dieser Flächen mit der Ebene bzw, den Ebenen, die durch den bzw. die abgebenden und empfangenden Wellenleiter verlaufen, konkave Ellipsensegmente sind, von denen benachbarte Ellipsensegmente einen gemeinsamen Brennpunkt haben, wobei die Brennpunkte (1A, 2A, 3A; 11A, 12A, 13A; 30A, 31A, 32A, 33A) der Ellipsen mit den geometrischen Mitelpunkten der Endflachen der optischen Wellenleiter (1, 2, 3; 11, 12, 13; 30, 31, 32, 33) zusammenfallen und wobei jede der Flächen das Lichbündel bzw. Teillichtbündel, das vom am einen Brennpunkt endenden Wellenleiter kommt, zum am anderen Brennpunkt endenden Wellenleiter reflektiert; und daß ein Körper (8, 18, 38) aus transparentem Material vorhanden ist, der etwa den gleichen Brechungsindex wie die Kerne der Wellenleiter (1, 2, 3; 11, 12, 13; 30, 31, 32, 33) aufweist und das optische System (7; 17; 27; 124, 125, 126; 37) und die am nächsten beim optischen System liegenden Endteile der Wellenleiter einbettet.

2. Koppelvorrichtung für über optische Wellenleiter übertragene Lichtbündel, sowohl zum Teilen eines Lichtbündels in wenigstens zwei Teillichtbündel als auch zum Kombinieren von wenigstens zwei Teillichtbündeln zu einem einzigen Lichtbündel, wobei der einzeln optische Wellenleiter (21, 22, 23) entweder als das zu teilende Lichtbündel bzw. eines der zu kombinierenden Teillichtbündel abgebender Leiter oder als eines der Teillichtbündel bzw. das kombinierte Lichtbündel empfangender Leiter denen soll, mit einem optischen System (124, 125, 126), das aus reflektierenden Flächen zum Verteilen oder Kombinieren der Lichtbündel gebildet ist, dadurch gekennzeichnet, daß die reflektierenden Flächen ebene Flächen (24, 25, 26) sind, von denen jeder zwei Linsen (124, 125, 126) zugeordnet sind, wobei der Brennpunkt (21A, 22A, 23A) jeder Linse mit dem geometrischen Mittelpunkt der Endfläche eines der Wellenleiter (21, 22, 23) zusammenfällt, so daß Äquivalenz zu den reflektierenden konkaven Segmenten von Ellipsenschnitten herrscht, und jede der Flächen das Lichtbündel bzw. Teillichtbündel zum an einem Brennpunkt endenden Wellenleiter relfektiert, das vom am anderen Brennpunkt endenden Wellenleiter kommt; und daß ein Körper (28) aus transparentem Material vorhanden ist, das etwa den gleichen Brechungsindex wie die Kerne der Wellenleiter (21, 22, 23) aufweist und das optische System (27, 124, 125, 126) und die am nächsten beim optischen System liegenden Endteile der Wellenleiter einbettet.

3. Koppelvorrichtung nach Anspruch 1, dadurch gekennzeichnet, daß die konkaven Reflexionsflächen (4, 5, 6; 14, 15, 16; 34, 35, 36, 44, 45, 46) Teile von Rotations-Ellipsoiden sind.

4. Koppelvorrichtung nach Anspruch 1, dadurch gekennzeichnet, daß die konkaven Reflexionsflächen (4, 5, 6; 14, 15, 16; 34, 35, 36, 44, 45, 46) Teile von zylindrischen Flächen mit elliptischem Querschnitt sind.

5. Koppelvorrichtung nach Anspruch 1, dadurch gekennzeichnet, daß die Zahl der Wellenleiter (1, 2, 3; 11, 12, 13; 21, 22, 23; 30, 31, 32, 33) und ihre Lage relativ zueinander und zu den Reflexionsflächen (4, 5, 6; 14, 15, 16; 24, 25, 26; 34, 35, 36 44, 45, 46) den Einfallswinkel der Lichtbündel bzw. Teillichtbündel auf die einzeine reflektierende Fläche so bestimmen, daß die meisten oder alle Strahlen des bzw. der entsprechenden reflektierten Bündel(s) die Endfläche(n) des bzw. der empfangenden Wellenleiter innerhalb eines Winkels erreichen, der nicht größer ist als der jeweilige Annahmewinkel des bzw. der Wellenleiter(s).

6. Koppelvorrichtung nach den Ansprüchen 1 und 5, dadurch gekennzeichnet, daß die Achsen der Wellenleiter in einer gemeinsamen Ebene liegen und die Mittelpunkte der Endflächen der Wellenleiter in den Endpunkten eines regelmäßigen Vielecks liegen, und daß die Achse jedes Wellenleiters durch die Schnittlinie der beiden benachbarten Reflexionsflächen verläuft, deren gemeinsamer Brennpunkt im Mittelpunkt der Endfläche des Wellenleiters liegt, und auf die Winkelhalbierende zwischen diesen benachbarten Flächen ausgerichtet ist, so daß ein eintretendes Lichtgündel in zwei im wesentlichen gleiche Bruchteile aufgeteilt und von den beiden Wellenlietern aufgenommen wird, die dem das eintretende Lichtbündel führenden Wellenleiter benachbart sind.

7. Koppelvorrichtung nach Anspruch 6, dadurch gekennzeichnet daß das Vieleck ein gleichsetiges Dreieck ist.

8. Koppelvorrichtung nach den Ansprüchen 1 und 5, dadurch gekennzeichnet, daß die Achsen der Wellenleiter in einer gemeinsamen Ebene liegen und so ausgerichtet sind, daß wenigstens eine der Achsen eines der Ellipsensegmente in einem von den Endpunkten unterschiedlichen Punkt schneidet.

9. Koppelvorrichtung nach Anspruch 1, dadurch gekennzeichnet, daß vier Wellenleiter (30, 31, 32, 33) zu verbinden sind, deren Achsen nicht in einer gemeinsamen Ebene liegen und auf die Diagonalen eines Wür-fels (37) ausgerichtet sind, und daß die Reflexionsflächen durch die Würfelflächen (34, 35, 36 44, 45, 46) gebildet sind und die aus in einer gemeinsamen Würflecke zusammenlaufenden Würfelflächen gebildeten Reflexionsflächen einem gemeinsamen Brennpunkt haben.

10. Koppelvorrichtung nach Anspruch 1, bei die die optischen Wellenleiter ein stufiges Brechungsindexprofil aufweisen, dadurch gekennzeichnet, daß die Reflexionsflächen eine Strahlenweginversion zwisen Axialstrahlen und Strahlen mit dem kritischen Winkel der Wellenleiter bewirken.

11. Koppelvorrichtung nach Anspruch 1, dadurch gekennzeichnet, daß sie eine Mehrzahl von Gruppen optischer Wellenleiter (101, ..., 107) und eine Mehrzahl von optischen Systemen (47, 57, 67), die von einer Mehrzahl konkaver Reflexionsflächen mit elliptischen Querschnitt gebildet sind, umfaßt und daß die Gruppen der Wellenleiter den optischen Systemen (47, 57, 67) so zugeordnet sind, daß wenigstens einige Wellenleiter (103, 104), die die von den Flächen eines der optischen-Systeme (47, 57) reflektierten Lichtbündel empfangen, als an die Reflexionsflächen eines anderen der optischen Systeme (57, 67) abgebende- Wellenleiter dienen.

**Revendications**

1. Dispositif de couplage de faisceaux lumineux transmis par guide d'onde optique, apte d'un côté` partager un faisceau lumineux en au moins deux faisceaux partiels et de l'autre côté à combiner en un seul faisceau au moins deux faisceaux partiels, chacun des guides d'onde optiques (1, 2, 3; 11, 12, 13; 30, 31, 32, 33) peuvant agir soit comme guide de lancement de faisceau lumineux à partager ou d'un des faisceaux lumineux partiels à combiner, soit comme guide de récolte d'un faisceau partiel ou du faisceau résultant de la combinaison, le dispositif comprenant un système optique (7; 17; 27, 37) composé par de surfaces réfléchissantes (4, 5, 6; 14, 15, 16; 34, 35, 36, 44, 45, 46) pour distribuer ou combiner les faisceaux lumineux, caracterisé en ce que les sections des surfaces par le plan (ou les plans pas sant par le guide ou les guides de lancement et de récolte sont des segments concaves d'ellipses, tels que les segments adjacents aient un foyer commun et les foyers (1A, 2A, 3A; 11A, 12A, 13A; 30A, 31A, 32A, 33A) desdites ellipses coïncident avec le centre géométrique de l'embouchure desdits guides d'onde optiques (1, 2, 3; 11, 12, 13; 30, 31, 32, 33), chaque surface réfléchissant vers le guide se terminant dans un premier foyer le faisceau ou la partie de faisceau provenant du guide se terminant dans l'autre foyer; et en ce qu'on a prévu un corps (8; 18; 38) d'un matériau transparent, qui a un indice de réfraction à peu près égal à l'indice du coeur desdits guides (1, 2, 3; 11, 12, 13; 30, 31, 32, 33) et renferme le système optique (7; 17; 27; 124, 125, 126; 37) et les parties terminales desdits guides les plus proches dudit système.

2. Dispositif de couplage de faisceaux lumineux transmis par guide d'onde optique, apte d'un côte à partager un faisceau lumineux au moins deux faisceaux partiels et de l'autre côté à combiner en un seul faisceau au moins deux faisceaux partiels, chacun des guides d'onde optiques (21, 22, 23) peuvent agir soit comme guide de lancément de faisceau lumineux à partager ou d'un des faisceaux lumineux partiels à combiner, soit comme guide de récolte d'un faisceau partiel ou du faisceau résultant de la combinaison; le dispositif comprenant un système optique (124, 125, 126) composé par des surfaces réfléchissantes pour distribuer ou combiner les faisceaux lumineux, caractérisé en ce que les surfaces réfléchissantes sont des surfaces planes (24, 25, 26) chacune associée avec deux lentilles (124, 125, 126), un foyer (21A, 22A, 23A) de chaque lentille étant coïncidant avec le centre géométrique d'un desdits guides d'onde optiques (21, 22, 23) de façon réaliser l'équivalence avec des segments concaves réfléchissants de sections d'ellipses, chaque surface réfléchissant vers le guide se terminant dans un premier foyer le faisceau ou la partie de faisceau provenant du guide se terminant dans l'autre foyer; et en ce qu'on a prévu un corps (28) d'un matériau transparent, qui a un indice de réfraction à peu près égal à l'indice du coeur desdits guides (21, 22, 23) et renferme le système optique (27, 124, 125, 126) et les parties terminales desdites guides les plus proches dudit système.

3. Dispositif selon la revendication 1, caractérisé en ce que lesdites surfaces réfléchissantes concaves (4, 5, 6; 14, 15, 16; 34, 35, 36, 44, 45, 46) sont des éléments d'elliosoïde de révolution.

4. Dispositif selon la revendication 1, caractérisé en ce que lesdites surfaces réfléchissantes concaves (4, 5, 6; 14, 15, 16; 34, 35, 36, 44, 45, 46) sont des parties de surfaces cylindriques avec section elliptique.

5. Dispositif selon la revendication 1, caractérisé en ce que le nombre des guides d'onde (1, 2, 3; 11, 12, 13; 21, 22, 23; 30, 31, 32, 33) et leur position l'un par rapport à l'autre et par rapport aux surfaces réfléchissantes (4, 5, 6; 14, 15, 16; 24, 25, 26; 34, 35, 36, 44, 46) déterminent les angles d'incidence des faisceaux ou des parties de faisceau sur chaque surface réfléchissante, de façon que la plus grande partie ou la totalité des rayons du faisceau réfléchi correspondant ou des fiasceaus réfléchis correspondantes atteigne l'embouchure du guide ou des guides de récolte à l'intérieur d'un angle non supérieur à l'angle ou aux angles d'acceptation dudit guide ou desdits guides.

6. Dispositif selon les revendications 1 et 5, caractérisé en ce que les axes desdits guides sont coplanaires et les centres des embouchures des guides se trouvent dans les sommets d'un polygone réguilier, et en ce que l'axe de chaque guide rencontre l'intersection des deux surfaces réfléchissantes adjacentes dont le foyer commun coïncide avec le centre de l'embouchure de guide, et est aligné avec la bissectrice de l'angle formé par lesdites surfaces adjacentes, de façon qu'un faisceau lancé est partagé en deux parties substantiellement égales, recueillies par les guides adjacent au guide qui amène le faisceau lancé.

7. Dispositif selon la revendication 6, caractérisé en ce que ledit polygone est un triangle équilatérale.

8. Dispositif selon les revendications 1 et 5, caractérisé en ce que les axes desdits guides sont coplanaires et orientés de façon qu'au moins un desdits axes croise un desdits segments d'ellipse dans un point différent des extrémités.

9. Dispositif selon la revendication 1, caractérisé en ce qu'on doit connecter quatre guides (30, 31, 32, 33) dont les axes sont non-coplanaires et sont alignés avec les diagonales d'un cube (37), et en ce que lesdites surfaces réfléchissantes sont formées par les faces (34, 35, 36, 44, 45, 46) du cube, les surfaces formées par les faces convergentes dans un même sommet du cube ayant un foyer commun.

10. Dispositif selon la revendication 1, dans lequel les guides optiques ont un profil en saut d'indice de réfractioin, caractérisé en ce que lesdites surfaces réfléchissantes effectuant une inversion du chemin optique entre les rayons axiaux et les rayons avec l'angle maximum de guidage.

11. Dispositif selon la revendication 1, caractérisé en ce qu'il comporte plusieurs ensembles de guides optiques (101 ... 107) et plusieurs systèmes optiques (47, 57, 67) constitués par une pluralité de surfaces réfléchissantes concaves à section elliptique, lesdits ensembles de guides étant associés avec les systèmes optiques (47, 57, 67) de façon qu'au moins quelques uns des guides (103, 104) recueillant les faisceaux réfléchis par les surfaces d'un des systèmes optiques (47, 57) agissent comme guide de lancement vers les surfaces réfléchissantes d'un autre système optique (57, 67).

Fig.1

Fig.3

Fig.2

33

33A

38

45 44

32A 32

37

36

46

34 35

31A

31

30A

30

Fig·4

101 102

W₁ W

47

V2

103

W2

W4 W3

105 57 104

W3

106

W5

67

W6

107

Fig·5